(19) Europäisches Patentamt
European Patent Office
Office européen des brevets

(11) EP 2 920 130 B1

(12) # EUROPEAN PATENT SPECIFICATION

(45) Date of publication and mention of the grant of the patent:
**26.10.2016 Bulletin 2016/43**

(21) Application number: **13792374.4**

(22) Date of filing: **18.11.2013**

(51) Int Cl.:
***C04B 28/36*** *(2006.01)*

(86) International application number:
**PCT/EP2013/074081**

(87) International publication number:
**WO 2014/076280 (22.05.2014 Gazette 2014/21)**

(54) **SULPHUR CEMENT PRODUCT**

SCHWEFELZEMENTPRODUKT

PRODUITS DE CIMENT AU SOUFRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.11.2012 EP 12193237**

(43) Date of publication of application:
**23.09.2015 Bulletin 2015/39**

(73) Proprietor: **Shell Internationale Research Maatschappij B.V.**
**2596 HR Den Haag (NL)**

(72) Inventors:
- **AL-ANSARY, Marwa**
  **Doha**
  **91791 (QA)**
- **SCHOLTEN, Wilhelmus Johannes Franciscus**
  **Doha**
  **91791 (QA)**
- **SUNIFAR, Parilakathoottu Aboobacker**
  **Doha**
  **91791 (QA)**

(74) Representative: **Matthezing, Robert Maarten et al**
**Shell International B.V.**
**Intellectual Property Services**
**P.O. Box 384**
**2501 CJ The Hague (NL)**

(56) References cited:
**WO-A1-2010/133580** **WO-A2-2007/065920**
**WO-A2-2009/130584**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 920 130 B1

## Description

Field of the Invention

The present invention provides sulphur cement products such as sulphur mortar and sulphur concrete. The invention further provides a process for the preparation of sulphur cement products.

Background of the Invention

Elemental sulphur or modified sulphur can be used to bind aggregate and filler, thereby providing sulphur cement products such as sulphur mortar and sulphur concrete. Sulphur concrete can be used in a variety of pre-cast concrete applications such as marine defences, paving slabs, road barriers and retaining walls.

Sulphur modifiers are used to improve the strength and durability of sulphur cement products. Organosilanes and organotitanates are effective modifiers and are described for example in WO 2007 65920, WO 2008 152054, WO 2009 150193, WO 2011 000837 and WO 2012 101127. In addition to improving strength, these modifiers can improve the workability of the mix of sulphur and aggregates.

WO 2009 130584 describes an alternative modification system wherein sulphur modification is achieved by reacting sulphur with a non-ionic surfactant and with bitumen, wherein the preferred amount of bitumen and surfactant is 2.5-5wt% of the modified sulphur.

During periods when the price of sulphur is high, it is desirable to lower the sulphur percentage in sulphur cement products. However, reducing the percentage of sulphur can decrease the workability of the mix of sulphur and aggregates such that it is difficult to cast sulphur cement products. Increasing the amount of modifier, e.g. an organosilane modifier, can improve the workability, but the modifier is typically a costly component. The present inventors have sought to reduce the sulphur percentage in sulphur cement products whilst retaining acceptable workability.

Summary of the Invention

The present inventors have found that adding bitumen to a sulphur cement product, wherein the sulphur cement product comprises an organosilane or organotitanate modifier and wherein the amount of bitumen is within a specific range, can provide sulphur cement products with lower amounts of sulphur but acceptable workability. Accordingly the present invention provides a sulphur cement product comprising sulphur, filler, aggregate, modifier and bitumen, wherein the amount of bitumen is from 0.01 to 0.30wt%, based upon the weight of the sulphur cement product, and wherein the modifier is chosen from the group consisting of organosilanes and organotitanates.

The present invention further provides a process for the preparation of a sulphur cement product comprising the steps of:

(a) admixing sulphur, filler, aggregate, modifier and bitumen at a temperature at which the sulphur is molten, wherein the amount of bitumen is from 0.01 to 0.30wt%, based upon the weight of the sulphur cement product, and wherein the modifier is chosen from the group consisting of organosilanes and organotitanates; and

(b) solidifying the molten sulphur cement product.

Detailed Description of the Invention

The term "sulphur cement product"refers to a composite comprising sulphur, filler and aggregate. Fillers and aggregate are particulate inorganic materials. Fillers have an average particle size in the range of from 0.1 μm to 0.1 mm. Fine aggregate has an average particle size in the range of from 0.1 to 5mm. Coarse aggregate has an average particle size in the range of from 5 to 40mm. Sulphur mortar of the invention comprises sulphur, filler and fine aggregate, but does not comprise coarse aggregate. Sulphur concrete of the invention comprises sulphur, filler, coarse aggregate, and optionally fine aggregate.

The sulphur cement product of the present invention comprises bitumen. The bitumen may be a residue from the distillation of crude oil, a cracked residue, naturally occurring bitumen or a blend of various bitumen types. Examples of bitumen that may be conveniently used in the present invention include distillation or "straight run" bitumen, precipitation bitumen, e.g. propane bitumen, oxidised or blown bitumen, naphthenic bitumen or mixtures thereof. The penetration value of the bitumen is preferably from 20 to 200 1/10mm at 25°C (measured in accordance with EN 1426).

The amount of bitumen is from 0.01 to 0.30wt%, based upon the weight of the sulphur cement product. Preferably the amount of bitumen is from 0.01 to 0.20wt%, more preferably from 0.01 to 0.15wt%. The present inventors have found that this quantity of bitumen provides useful workability of the mix of sulphur, filler, aggregate and modifier. Outside of this range, the workability of the sulphur cement mix is inferior.

The amounts of sulphur, filler and aggregate in the sulphur cement products of the invention can be chosen by the skilled person in view of the proposed application of the sulphur cement product. The skilled person will seek to ensure that sufficient sulphur is incorporated to bind the filler and aggregate, that sufficient filler and aggregate are incorporated to provide mechanical strength and that the balance of components provides a mixture with suitable workability for the proposed application. Sulphur mortar preferably comprises from 5 to 40wt% sulphur, from 20 to 75wt% fine aggregate and from 5 to 40wt% filler; more preferably from 5 to 30wt% sulphur, from 40 to 70wt% fine aggregate and from 5 to 30wt% filler. Sulphur concrete preferably comprises from 5 to 40wt% sulphur, from 5 to 50wt% coarse aggregate, from 20 to 60wt% fine aggregate and from 1 to 20wt% filler; more preferably from 5 to 30wt% sulphur, from 25 to 40wt% coarse aggregate, from 25 to 40wt% fine aggregate and from 6 to 15wt% filler. The weight percentages are based upon the weight of the sulphur cement product. The inventors have observed that the amount of sulphur can be reduced, whilst retaining acceptable workability, due to the incorporation of bitumen in the sulphur cement product.

The sulphur cement product comprises modifier. The amount of modifier is preferably from 0.001 to 1wt%, more preferably from 0.01 to 0.6wt% and most preferably from 0.01 to 0.4wt%, by weight of the sulphur cement product. The modifier is typically one of the most expensive components in the concrete, so it is desirable to limit the amount of modifier. The modifier may be an organosilane or an organotitanate and is preferably an organosilane.

Organosilanes are compounds having at least one carbon-silicon bond or at least one carbon-oxygen-silicon group. Preferred organosilanes are organosilanes of the general molecular formula (I):

$$(R^1O)_3Si\text{-}A\text{-}Si(OR^2)_3 \qquad (I)$$

wherein $R^1$ and $R^2$ are independently $C_{1-6}$ alkyl or hydrogen, and A is a divalent functional group comprising one or more groups chosen from thiol, sulphide, amine or alkenyl groups. Preferably $R^1$ and $R^2$ are ethyl or methyl groups, or hydrogen. Preferably A is a polysulphide group of formula - $(CH_2)_x$-$S_y$-$(CH_2)_z$- wherein x is an integer from 1 to 4, y is an integer from 2 to 8, and z is an integer from 1 to 4. Most preferably x and z are the same and y is from 2 to 6. Particularly preferred organosilanes are bis(3-triethoxysilylpropyl)tetrasulphide (TESPT) and bis(3-triethoxysilylpropyl)disulphide.

The organosilane is alternatively of general formula (II):

$$(R^3O)_3Si\text{-}A' \qquad (II)$$

wherein $R^3$ is $C_{1-6}$ alkyl or hydrogen, and A' is a univalent functional group comprising one or more groups chosen from thiol, sulphide, amine or alkenyl groups. Preferably $R^3$ is an ethyl or methyl group or hydrogen. Preferably, A' is a thiol group or sulphide group, having the formula $-(CH_2)_p-S_q-(CH_2)_r-H$, wherein p is an integer from 1 to 4, q is an integer from 1 to 8 and r is 0 or an integer from 1 to 4. In one embodiment, q is 1 and r is 0, such that A' is a thiol group. In another embodiment, q is from 2 to 8 and r is from 1 to 4, such that A' is a polysulphide group. In another preferred embodiment, A' is a primary amine group of formula $-(CH_2)_n-NH_2$, wherein n is an integer from 1 to 4. In yet another preferred embodiment, A' is an alkenyl group of formula $-(CH_2)_m-X$, wherein m is an integer from 0 to 4 and X is an alkenyl group. Possible X groups are shown below:

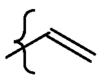 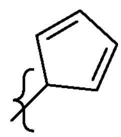 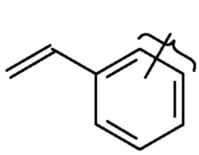 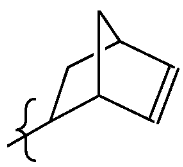

Alternatively, the organosilane may be an organosilane having at least one amino functional group. The organosilane may be functionalised with one amino group or with several amino groups. Suitable organosilanes include 3-aminopropyl triethoxy silane, bis(triethoxysilylpropyl)amine, ,3-bis(3-aminopropyl)-1,1,3,3-tetramethyldisiloxane, Dynasylan™ 1146 and Dynasylan™ 1151.

Organotitanates are compounds having at least one carbon-titanium bond or at least one carbon-oxygen-titanium group. Preferred organotitanates are of general formula (III) or (IV):

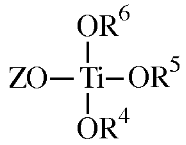 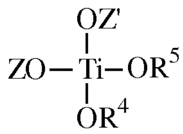

(III) (IV)

wherein $OR^4$, $OR^5$ and $OR^6$ are independently chosen from acyloxy, phosphato, pyrophosphato, sulfonato and glycoxy; and ZO and Z'O are independently chosen from alkoxy or neoalkoxy group or ZO and Z'O together form a glycoxy group. The $OR^4$, $OR^5$ and $OR^6$ groups are preferably acyloxy, dialkyl phosphato, dialkyl pyrophosphato or alkylbenzene sulfonato groups. If ZO and/or Z'O are alkoxy groups, Z and/or Z' are preferably $C_1$-$C_{25}$ alkyl. Z and Z' are most preferably isopropyl. Organotitanates with neoalkoxy groups are described further in US 4,623,738.

Alternatively the organotitanates may be as described in WO 2008/152054.

The sulphur cement products of the invention are prepared by a process wherein the components are mixed at a temperature at which the sulphur is molten, i.e. typically above 120°C, preferably in the range of from 120 to 150°C, more preferably in the range of from 125 to 140°C. Preferably the modifier is mixed with the filler and the aggregate before the bitumen is added. The mixture is preferably poured into a mould. The sulphur cement product is then solidified by cooling to a temperature at which the sulphur solidifies. After cooling, the sulphur cement product can be demoulded.

Sulphur cement products produced according to the present invention can be used in a variety of applications. Sulphur concrete may be used in pre-cast concrete applications such as marine defences, paving slabs, road barriers and retaining walls.

Examples

The invention is further illustrated by means of the following non-limiting examples.

Sulphur mortar samples (examples 1-3 and comparative examples 1-4) and sulphur concrete samples (examples 4-6 and comparative example 5) were prepared having the compositions shown in Table 1.

Table 1

| | Sulphur (wt%) | Coarse Aggregate (wt%) | Fine Aggregate (wt%) | Filler (wt%) | Modifier (wt%) | Bitumen (wt%) |
|---|---|---|---|---|---|---|
| Example 1 | 20.5 | 0 | 60.39 | 19.0 | 0.06 | 0.05 |
| Example 2 | 20.0 | 0 | 61.07 | 19.0 | 0.08 | 0.05 |
| Example 3 | 19.8 | 0 | 61.05 | 19.0 | 0.10 | 0.05 |
| Comparative Example 1 | 23.5 | 0 | 57.25 | 19.19 | 0.06 | 0 |
| Comparative Example 2 | 22.5 | 0 | 56.48 | 20.94 | 0.08 | 0 |
| Comparative Example 3 | 21.8 | 0 | 58.10 | 20.00 | 0.10 | 0 |
| Comparative Example 4 | 23.4 | 0 | 58.20 | 18.35 | 0 | 0.05 |
| Example 4 | 17.0 | 34.7 | 36.05 | 12.05 | 0.10 | 0.10 |
| Example 5 | 17.0 | 34.7 | 36.05 | 12.00 | 0.10 | 0.15 |
| Example 6 | 17.0 | 34.7 | 35.90 | 12.00 | 0.10 | 0.30 |
| Comparative Example 5 | 17.0 | 34.6 | 36.00 | 12.30 | 0.10 | 0 |

The coarse aggregate was Gabbro 10mm. The fine aggregate was dune sand which has been screened through a 2mm sieve. The filler was gabbro dust. The modifier was bis(3-triethoxysilylpropyl)tetrasulphide (TESPT).

Mixes were prepared by preheating the aggregates, filler and steel moulds for at least 12 hours at 150°C. A mixer was heated to 145°C and then sulphur was added to the mixer pan. Once the sulphur melted in the mixer pan, the aggregates, then the modifier and then the filler were added. The duration of mixing was 15 minutes before addition of filler and 45 minutes after addition of filler. Next, the bitumen was added and mixed for 15 minutes. Vibration for 2 minutes on a Retsch sieve shaker was applied after casting the hot mix into the mould. After vibration, the samples were kept inside a thermal insulation box to reduce the cooling rate. The moulds produced cubic samples of dimensions $10x10x10cm^3$.

The workability of the mixes was assessed visually. Table 2 shows that incorporating bitumen into sulphur mortars provides mixes with acceptable workability even though the sulphur content has been lowered:

Table 2

| | Sulphur (wt%) | Bitumen (wt%) | Workability |
|---|---|---|---|
| Comparative Example 1 | 23.5 | 0 | Good |
| Example 1 | 20.5 | 0.05 | Good |
| Comparative Example 2 | 22.5 | 0 | Good |
| Example 2 | 20.0 | 0.05 | Good |
| Comparative Example 3 | 21.8 | 0 | Good |
| Example 3 | 19.8 | 0.05 | Good |

The unconfined compressive strength (UCS in MPa) of the samples was tested according to BS EN 12390 part (3)-2009: Testing of hardened concrete - part (3) compressive strength of test specimen. The samples were tested after three days in air, and also after submersion in water for 100 days. The strength retention (%) is reported as:

$$\frac{\text{UCS after submersion in water for 100 days}}{\text{UCS after three days in air}} \times 100$$

The results of the strength testing are shown in table 3:

Table 3

| | UCS (air, MPa) | UCS (water, MPa) | Strength retention (%) |
|---|---|---|---|
| Comparative Example 1 | 43.5 | 31 | 71 |
| Comparative Example 3 | 44 | 30 | 68 |
| Example 1 | 40 | 32 | 80 |
| Example 3 | 36 | 37 | 103 |
| Comparative Example 5 | 52 | 36.5 | 70 |
| Example 4 | 47 | 32 | 68 |
| Example 5 | 40.5 | 30 | 74 |
| Example 6 | 18.9 | 15.6 | 83 |

The strength retention is similar for the examples and comparative examples, showing that the incorporation of bitumen according to the invention does not detrimentally affect the strength retention. The unconfined strength for example 6 (comprising 0.3% bitumen) is less, showing that increasing the percentage of bitumen can be detrimental to the strength of the sulphur cement product.

## Claims

1. A sulphur cement product comprising sulphur, filler, aggregate, modifier and bitumen, wherein the amount of bitumen is from 0.01 to 0.30wt%, based upon the weight of the sulphur cement product, and wherein the modifier is chosen

from the group consisting of organosilanes and organotitanates.

2. A sulphur cement product according to claim 1, which is a sulphur mortar comprising from 5 to 40wt% sulphur, from 20 to 75wt% fine aggregate and from 5 to 40wt% filler.

3. A sulphur cement product according to claim 1, which is a sulphur concrete comprising from 5 to 40wt% sulphur, from 5 to 50wt% coarse aggregate, from 20 to 60wt% fine aggregate and from 1 to 20wt% filler.

4. A sulphur cement product according to any preceding claim, comprising from 0.001 to 1wt% modifier.

5. A sulphur cement product according to claim 4, wherein the modifier is an organosilane.

6. A sulphur cement product according to claim 5, wherein the organosilane is bis(3-triethoxysilylpropyl)tetrasulphide.

7. A process for the preparation of a sulphur cement product comprising the steps of:

(a) admixing sulphur, filler, aggregate, modifier and bitumen at a temperature at which the sulphur is molten, wherein the amount of bitumen is from 0.01 to 0.30wt%, based upon the weight of the sulphur cement product, and wherein the modifier is chosen from the group consisting of organosilanes and organotitanates; and
(b) solidifying the molten sulphur cement product.

8. A process according to claim 7, wherein in step (a) the sulphur, filler, aggregate and modifier are admixed before the addition of bitumen.

## Patentansprüche

1. Schwefelzementprodukt, umfassend Schwefel, Füllstoff, Zuschlag, Modifizierungsmittel und Bitumen, wobei die Menge an Bitumen 0,01 bis 0,30 Gew.% beträgt, bezogen auf das Gewicht des Schwefelzementprodukts, und wobei das Modifizierungsmittel ausgewählt ist aus der Gruppe bestehend aus Organosilanen und Organotitanaten.

2. Schwefelzementprodukt nach Anspruch 1, das ein Schwefelmörtel ist, der 5 bis 40 Gew.% Schwefel, 20 bis 75 Gew.% feinen Zuschlag und 5 bis 40 Gew.% Füllstoff umfasst.

3. Schwefelzementprodukt nach Anspruch 1, das ein Schwefelbeton ist, der 5 bis 40 Gew.% Schwefel, 5 bis 50 Gew.% groben Zuschlag, 20 bis 60 Gew.% feinen Zuschlag und 1 bis 20 Gew.% Füllstoff umfasst.

4. Schwefelzementprodukt nach einem der vorhergehenden Ansprüche, umfassend 0,001 bis 1 Gew.% Modifizierungsmittel.

5. Schwefelzementprodukt nach Anspruch 4, wobei das Modifizierungsmittel ein Organosilan ist.

6. Schwefelzementprodukt nach Anspruch 5, wobei das Organosilan Bis(3-triethoxysilylpropyl)tetrasulfid ist.

7. Verfahren zur Herstellung des Schwefelzementprodukts, umfassend die Schritte:

(a) Vermischen von Schwefel, Füllstoff, Zuschlag, Modifizierungsmittel und Bitumen bei einer Temperatur, bei der der Schwefel geschmolzen ist, wobei die Menge an Bitumen 0,01 bis 0,30 Gew.% beträgt, bezogen auf das Gewicht des Schwefelzementprodukts, und wobei das Modifizierungsmittel ausgewählt ist aus der Gruppe bestehend aus Organosilanen und Organotitanaten, und
(b) Verfestigen des geschmolzenen Schwefelzementprodukts.

8. Verfahren nach Anspruch 7, wobei in Schritt (a) der Schwefel, Füllstoff, Zuschlag und das Modifizierungsmittel vermischt werden, bevor das Bitumen zugegeben wird.

**Revendications**

1. Produit de ciment au soufre comprenant du soufre, une charge, un agrégat, un modificateur et un bitume, dans lequel la quantité de bitume est de 0,01 à 0,30 % en poids, relativement au poids du produit de ciment au soufre, et dans lequel le modificateur est sélectionné dans le groupe constitué d'organosilanes et d'organotitanates.

2. Produit de ciment au soufre selon la revendication 1, lequel est un mortier au soufre comprenant de 5 à 40 % en poids de soufre, de 20 à 75 % en poids d'agrégat fin, et de 5 à 40 % en poids de charge.

3. Produit de ciment au soufre selon la revendication 1, lequel est un béton au soufre comprenant de 5 à 40 % en poids de soufre, de 5 à 50 % en poids d'agrégat grossier, de 20 à 60 % en poids d'agrégat fin, et de 1 à 20 % en poids de charge.

4. Produit de ciment au soufre selon l'une quelconque des revendications précédentes, comprenant de 0,001 à 1 % en poids de modificateur.

5. Produit de ciment au soufre selon la revendication 4, dans lequel le modificateur est un organosilane.

6. Produit de ciment au soufre selon la revendication 5, dans lequel l'organosilane est le tétrasulfure de bis(3-triéthoxysilylpropyle).

7. Procédé de fabrication d'un produit de ciment au soufre, comprenant les étapes qui consistent à :

   (a) mélanger par addition le soufre, la charge, l'agrégat, le modificateur et le bitume, à une température à laquelle le soufre est à l'état fondu, dans lequel la quantité de bitume est de 0,01 à 0,30 % en poids, relativement au poids du produit de ciment au soufre, et dans lequel le modificateur est sélectionné dans le groupe constitué d'organosilanes et d'organotitanates ; et
   (b) solidifier le produit de ciment au soufre fondu.

8. Procédé selon la revendication 7, dans lequel à l'étape (a), le soufre, la charge, l'agrégat et le modificateur sont mélangés par addition avant l'addition du bitume.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 200765920 A
- WO 2008152054 A
- WO 2009150193 A
- WO 2011000837 A
- WO 2012101127 A
- WO 2009130584 A
- US 4623738 A